**Europäisches Patentamt**

(19) **European Patent Office**

**Office européen des brevets**

(11) Veröffentlichungsnummer: **0 195 239**

**A2**

(12) # EUROPÄISCHE PATENTANMELDUNG

(21) Anmeldenummer: **86101736.6**

(22) Anmeldetag: **12.02.86**

(51) Int. Cl.⁴: **C 03 C 17/00**
**B 41 M 1/34**

(30) Priorität: **21.02.85 DE 3505922**

(43) Veröffentlichungstag der Anmeldung:
**24.09.86 Patentblatt 86/39**

(84) Benannte Vertragsstaaten:
**AT CH FR GB IT LI NL**

(71) Anmelder: **Schott Glaswerke**
**Hattenbergstrasse 10**
**D-6500 Mainz(DE)**

(71) Anmelder: **CARL-ZEISS-STIFTUNG**
**Schott Glaswerke Hattenbergstrasse 10**
**D-6500 Mainz 1(DE)**

(72) Erfinder: **Günthner, Franz**
**Tucholskyweg 46**
**D-6500 Mainz-Lerchenberg(DE)**

(74) Vertreter: **Rasper, Joachim, Dr.**
**Bierstadter Höhe 22**
**D-6200 Wiesbaden(DE)**

(54) **Verfahren zum Dekorieren von Glaskeramikplatten.**

(57) Bei einem Verfahren zum Dekorieren von Glaskeramik-platten, wie z.B. Herdplatten, werden die Dekorfarben im Siebdruckverfahren vor dem Keramisieren direkt aufgeb-racht. Anschließend werden das Keramisieren und das Farbeinbrennen gleichzeitig durchgeführt. Dadurch wird der zusätzliche Einbrennvorgang bzw. das üblicherweise ver-wendete Abziehbild eingespart.

## Beschreibung

Die Erfindung betrifft ein Verfahren zum Dekorieren von Glaskeramikplatten, bei dem die Dekorfarben im Siebdruckverfahren direkt aufgebracht werden.

Glaskeramikplatten werden oft mit einem Dekor versehen, um, wie z.B. bei Herdplatten, die Brennstellen zu markieren.

Es ist bekannt, das Dekor nach dem Abziehbildverfahren aufzubringen, bei dem ein Papier verwendet wird, das mit einem Lack beschichtet ist. Auf diese Lackschicht wird die Dekorfarbe im Siebdruckverfahren aufgebracht und anschließend mit einer Wachsschicht versehen.

Dieses mit dem gewünschten Dekor versehene Papier wird auf die auf etwa 150°C erwärmte Glaskeramikplatte gedrückt. Durch die unterschiedlichen Schmelzpunkte von Lack und Wachs bleibt das Wachs mit der Dekorfarbe beim Abziehen des Papiers auf der Glaskeramikscheibe haften. Beim Naßabziehbildverfahren wird das Papier vor dem Andrücken eingeweicht und dann auf die kalte Glaskeramikplatte gepresst.

Das Abziehbild wird entweder vor dem Keramisieren oder nach dem Keramisieren der Glaskeramikplatte aufgebracht.

Das Abziehbildverfahren hat den Nachteil, daß für jede Platte ein neues Abziehbild benötigt wird, was die Herstellung einer dekorierten Glaskeramikplatte verteuert. Wird das Abziehbild nach dem Keramisieren aufgebracht, muß sich zusätzlich noch der Einbrennvorgang anschließen.

Es wurde auch schon versucht, das Dekor unter Umgehung des Abziehbildes direkt auf die fertige Glaskeramikplatte im Siebdruckverfahren aufzubringen. Dies hat jedoch den Nachteil, daß anschließend die Dekorfarbe ebenfalls noch eingebrannt werden muß.

0195239

Ziel der vorliegenden Erfindung ist daher ein Verfahren, bei dem die oben genannten Nachteile vermieden werden.

Dieses Ziel wird mit einem Verfahren erreicht, bei dem die Dekorfarben vor dem Keramisieren aufgebracht werden und das Keramisieren und Farbeinbrennen gleichzeitig durchgeführt wird.

Dadurch, daß die Dekorfarben im Direktsiebdruckverfahren vor dem Keramisieren aufgebracht werden, wird der zusätzliche Einbrennvorgang bzw. das Abziehbild eingespart. Das Keramisieren und gleichzeitige Farbeinbrennen wird bei einer Temperatur von 900°C bis 930°C durchgeführt.

**Patentanspruch:**

1.   Verfahren zum Dekorieren von Glaskeramikplatten, bei dem die Dekorfarben im Siebdruckverfahren direkt aufgebracht werden, dadurch gekennzeichnet,

daß die Dekorfarben vor dem Keramisieren aufgebracht werden und

daß das Keramisieren und Farbeinbrennen gleichzeitig durchgeführt wird.